Europäisches Patentamt

European Patent Office

Office européen des brevets

(19)

(11) **EP 1 089 443 A1**

(12) **EUROPEAN PATENT APPLICATION**
published in accordance with Art. 158(3) EPC

(43) Date of publication:
04.04.2001 Bulletin 2001/14

(51) Int. Cl.[7]: **H04B 1/16**, H04L 7/00

(21) Application number: 00911345.7

(86) International application number:
**PCT/JP00/01818**

(22) Date of filing: **24.03.2000**

(87) International publication number:
**WO 00/57565 (28.09.2000 Gazette 2000/39)**

(84) Designated Contracting States:
**AT BE CH CY DE DK ES FI FR GB GR IE IT LI LU MC NL PT SE**

(30) Priority: **24.03.1999 JP 7961999**

(71) Applicant:
**KABUSHIKI KAISHA TOSHIBA**
**Kawasaki-shi, Kanagawa-ken 210-8572 (JP)**

(72) Inventor: **OGURA, Miyuki**
**Tachikawa-shi, Tokyo 190-0011 (JP)**

(74) Representative: **HOFFMANN - EITLE**
**Patent- und Rechtsanwälte**
**Arabellastrasse 4**
**81925 München (DE)**

(54) **MOBILE RADIO TERMINAL DEVICE AND RECEIVING CIRCUIT**

(57) The present invention has a configuration, by which a frequency deviation estimation circuit (10) detects a frequency deviation $\Delta f$ of a timing clock in a receiving duration, using a high-speed and high-accuracy system clock, and a $\tau$ estimation circuit (51) of a CPU (50) obtains a timing correction $\tau$ from the detected results. And then the $\tau$ estimation circuit (40) corrects the receiving timing obtained in a non-receiving duration by a timer (30), using the timing clock by the timing correction $\tau$ to start the receiving in the receiving duration according to the corrected receiving timing.

FIG. 1

EP 1 089 443 A1

## Description

Technical Field

The present invention relates to a waiting control in a digital mobile radio communication method, and, especially, to a mobile radio terminal device in a system requiring strict re-synchronization of receiving timing, such as the CDMA (Code Division Multiple Access) method.

Background Art

As is generally known, low electric power consumption at a waiting operation has been required for longer continuous operation time in a mobile radio terminal device such as a cellular telephone. Therefore, a high-speed internal system clock is stopped, and a low-speed and low-accuracy clock operating at a frequency of 32 kHz is used for a clock of a timing circuit in a non-receiving duration, instead of the system clock, to operate the hardware and software in the system.

As the clock of 32 kHz has no function to correct a frequency fluctuation caused by a temperature change, there may be a timing error between a received time decided by the above timer and an actual received time, when using it as a timer in the non-receiving duration for measurements.

In a receiver for an N (Narrow-band)-CDMA system, a timing error at transition from a non-receiving duration to a receiving one (at re-synchronization) may be preferably within ± 1 chip.

For example, a receiving timing error at using a clock operating at a frequency of 32 kHz ± 30 ppm as a timer is estimated to be from 16 μsec to 42 msec, depending on the non-receiving duration, though a required accuracy for detection of receiving timing at re-synchronization is ± 1 chip (± 0.81 microseconds) according to a standard of IS-95.

Thereby, if the 32 kHz one is used for waiting control in a terminal device in the N-CDMA system, there may be a large shift from a required timing in a receiving window for a searcher operation.

On the other hand, when the receiving window is extended, considering the large shift from the required timing, additional high-speed system clocks may be required, as there may be much more time for resynchronization, and there may be a problem to cause a useless electrical power consumption.

Disclosure of Invention

The present invention has been made for solving the above problems, and has an object to provide a mobile radio communication terminal device and a receiving circuit, which can obtain a required receiving timing, even when a clock with a low frequency accuracy is used as a timer in non-receiving duration.

In order to realize the above object, in the present invention, a mobile radio terminal device for intermittentlyly receiving according to a receiving duration and a non-receiving duration defined in time in a mobile radio communication system is configured to comprise: receiving timing detection means to detect a starting timing of the receiving duration by counting a first clock; frequency error detection means to detect a relative frequency error in the first clock, using a second clock with a higher speed and a better accuracy than those of the first clock; timing correction means to correct a starting timing of the receiving duration detected by the receiving timing detection means, based on the frequency error detected by the frequency error detection means; and receiving means for receiving according to a timing corrected by the timing correction means.

And, in the present invention, a receiving circuit for intermittently receiving according to a receiving duration and non-receiving duration defined in time in a mobile radio communication system is configured to comprise: receiving timing detection means to detect a starting timing of a receiving duration by counting a first clock; frequency error detection means to detect a relative frequency error in the first clock, using a second clock with a higher speed and a better accuracy than those of the first clock; and timing correction means to correct a starting timing of the receiving duration detected by the receiving timing detection means, based on the frequency error detected by the frequency error detection means.

In order to realize reduction in the electric power consumption, the mobile radio terminal device and the receiving circuit with the above configuration are configured to detect the relative frequency error of the first clock, using the second high-speed and high-accuracy clock to correct the starting timing of the receiving duration obtained with the low-speed first clock with possible errors, and to correct the detected starting timing, using the detection results.

Thereby, according to the mobile radio terminal device and the receiving circuit with the above configuration, a required receiving timing may be obtained, even when a first clock with low frequency accuracy is used as a timer in the receiving/non-receiving duration.

The present invention is characterized in that the frequency error detection means detects the relative frequency error of the first clock in the receiving duration, using the second clock. According to the above feature, it may be possible to detect the frequency error of the first clock without increasing the electric power consumption, as there is no need to generate a second high-speed clock for the above detection of the frequency error in the non-receiving duration.

Brief Description of Drawings

FIG. 1 is a circuit block diagram of a configuration of one embodiment of a receiving system of a mobile radio terminal device according to the present invention.

FIG. 2A to 2H are views for explaining an operation of a frequency deviation estimation circuit of the mobile radio terminal device shown in FIG. 1.

FIG. 3 is a circuit block diagram of a configuration of a Δf detection circuit of the mobile radio terminal device shown in FIG. 1.

FIG. 4 is a circuit block diagram of a configuration of a Δf sign decision circuit of the Δf detection circuit shown in FIG. 3.

FIG. 5A to 5D are views for explaining an operation of enable signal generation in the Δf sign decision circuit shown in FIG. 4.

FIG. 6 is a circuit block diagram of configuration of a timer and a timing correction circuit of the mobile radio terminal device shown in FIG. 1.

FIG. 7A to 7E are views for explaining an operation of the timer 30 and the timing correction circuit 40 when a receiving timing is fast.

FIG. 8A to 8E are views for explaining an operation of the timer 30 and the timing correction circuit 40 when the receiving timing is slow.

FIG. 9A to 9E are views for explaining a correction operation of the receiving timing at waiting operation of the mobile radio terminal device shown in FIG. 1.

Best Mode for Carrying Out the Invention

One embodiment of the present invention will be described, referring to drawings.

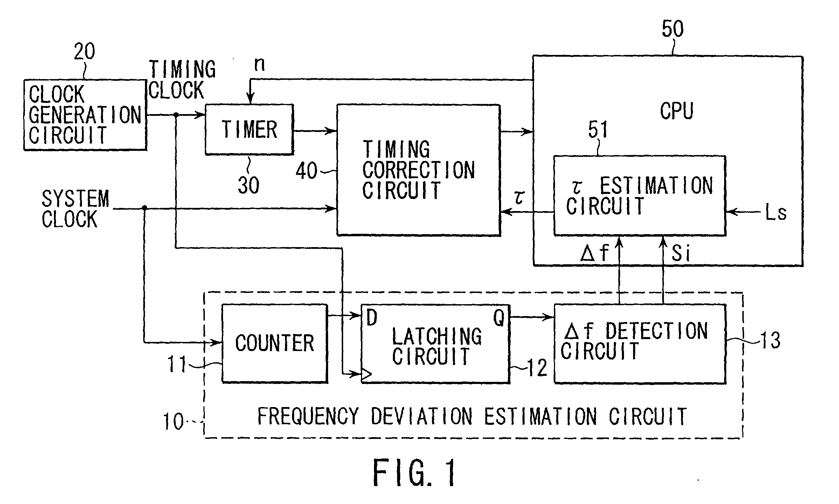

FIG. 1 shows a configuration of a receiving system of a mobile radio terminal device according to one embodiment of the present invention.

A frequency deviation estimation circuit 10 detects a frequency deviation Δf between a timing clock generated at a clock generation circuit 20 described later, and a high-speed system clock in synchronization with the system, and comprises a counter 11, a latch circuit 12, and a Δf detection circuit 13.

The accuracy of the timing clock generated at the clock generation circuit 20 is comparatively low, as there is no temperature correction of frequency, for example, at 32 kHz. On the other hand, the system clock operating, for example, at 9.803 MHz, is a higher-speed clock with higher accuracy, in comparison with the timing clock.

In the following description, it is assumed that the frequency of the timing clock generated at the clock generation circuit 20 is f1, an ideal cycle in an ideal state without any errors T0, a substantial cycle denoting an actual cycle T1, and a frequency of the system clock f2.

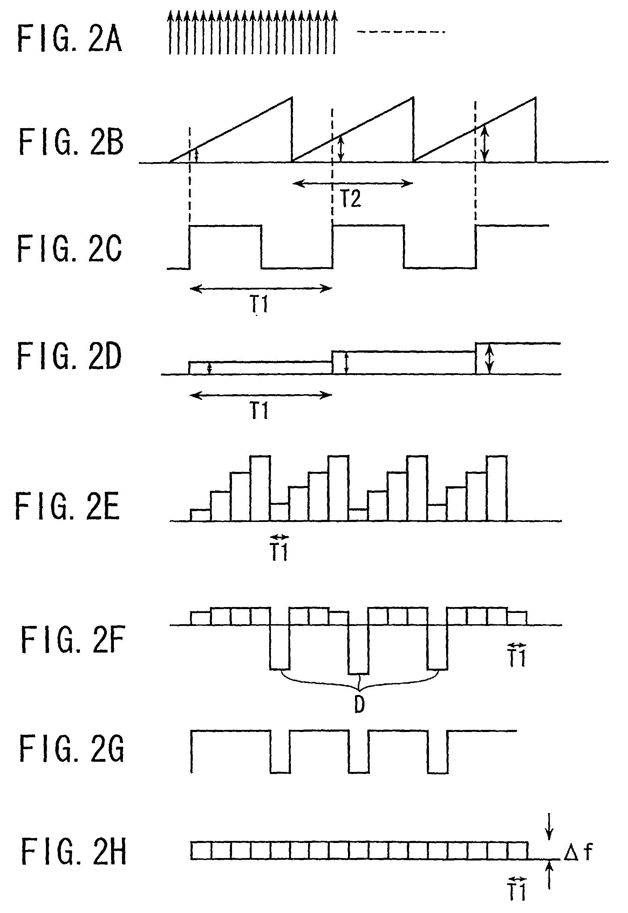

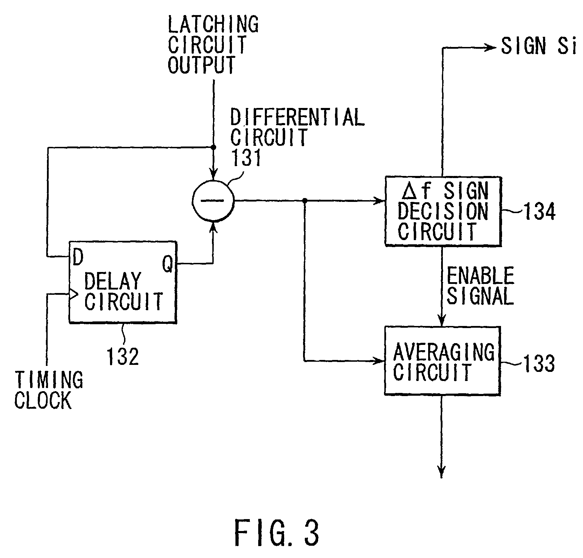

The frequency deviation estimation circuit 10 will be described below in details, referring to FIG. 2, and FIG. 3. FIG. 2 shows input/output signals of each part in the frequency deviation estimation circuit 10.

The counter 11 is a counter using the system clock (FIG. 2A) as an operation clock repeatedly counts the M values corresponding to the ideal cycle T0 of the above timing clock. A counted result is shown in FIG. 2B.

Here, if it is 32 kHz, and f2 is 9.803 MHz, for example, as mentioned above, the counter 11 repeatedly counts from 0 to 306 (=M).

The latch circuit 12 holds the outputs of the counter 11 at the edge of the timing clock (FIG. 2C). The held outputs are shown in FIGS. 2D and 2E.

The Δf detection circuit 13 obtains a frequency deviation Δf from the held output of the latch circuit 12, and outputs the deviation Δf as a voltage or amplitude information. Though the frequency deviation Δf is differential information between the ideal cycle T0 and the substantial cycle T1, long-time averaging processing is required for detection, as it is usually a very small value of the order of ppm.

FIG. 3 shows an example of a configuration of the Δf detection circuit. In the above configuration, a final frequency deviation Δf is obtained by averaging for a certain time the differential information between the held outputs of the latch circuit 12 and the outputs at the preceding sampling just before the current sampling.

Here, when the frequency accuracy of the timing is the same as that of the system clock, the output of the latch circuit 12 becomes constant in time, as the output cycle of the counter 11 coincides with the cycle T1 of the clock for the timing circuit.

However, the output of the latch circuit 12 may be changed in proportion to the frequency deviation of the timing clock, as there is actually no agreement between both cycles. That is, the larger frequency deviation, the larger change in one cycle, and the smaller deviation the smaller one of the change.

Thereby, in the embodiment, it is assumed that the difference between the output of the latch circuit 12 at the preceding sampling just before the current sampling, and the output of the circuit 12 at the current sampling is obtained by a differential circuit 131 and a delay circuit 132, and the obtained result is made an instantaneous change.

Though, in the present embodiment, the output of the latch circuit at the preceding sampling just before the current sampling is used for detection of the above instantaneous change, the output of the latch circuit which has been obtained at a plurality of samplings before the current sampling may be used to improve the detection accuracy, when the frequency deviation is small.

As the instantaneous changes have indents D independent from the frequency deviation at a prescribed cycle as shown in FIG. 2F, when the averaging value of the above instantaneous changes is obtained by a averaging circuit 133, the indents are configured not to be included for the averaging.

For the above processing, the positions of the indents D of the instantaneous indents are obtained by a Δf sign decision circuit 134, and notified to the averaging circuit 133 as an enable signal (FIG. 2G). The averaging circuit 133 excludes the indents D for the averaging processing by the notification.

Thereby, an averaging value Δf of the instantaneous changes is obtained by the averaging circuit 133, excluding the indent D, as shown in FIG. 2H. The above Δf is notified to a CPU 50 described later.

And, in order to obtain a direction of the frequency deviation, a polarity (sign) Si of the instantaneous change is obtained, and notified to the CPU 50 described later, by the Δf sign decision circuit 134.

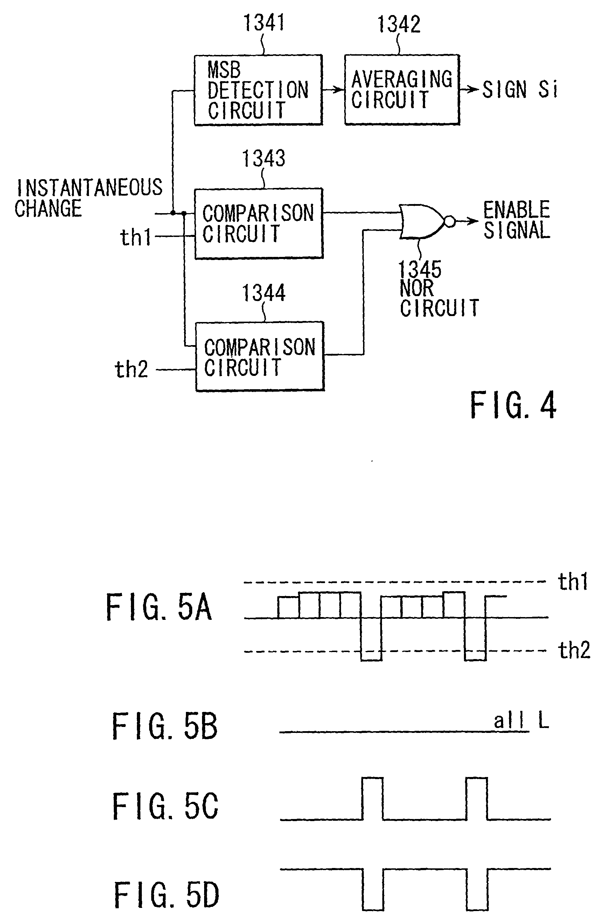

An example of a configuration of the Δf sign decision circuit 134 is shown in FIG. 4. The Δf sign decision circuit 134 comprises an MSB detection circuit 1341, an averaging circuit 1342, comparison circuits 1343, 1344, and a NOR circuit 1345.

The MSB detection circuit 1341 detects an instantaneous change MSB output by the differential circuit 131 to output it to the averaging circuit 1342. The averaging circuit 1342 obtains an average of MSB detected values of the MSB detection circuit 1341 for a prescribed time to obtain the sign Si of the above instantaneous change, and to notify it to the CPU 50.

Here, for example, the above sign Si which is detected to be positive shows that the receiving timing is faster, in comparison with the actual received time, and the sign detected to be negative shows that the timing is slow in comparison with the actual time.

Now, the instantaneous change is assumed to be abnormal when the indents D of the above instantaneous changes are caused only when the output of the latch circuit 12 is changed almost from the vicinity of the maximum level almost to the 0 level (See FIG. 2F). The negative changes (indent D) is usually much larger than other changes.

Then, the indent D is detected by comparison with the instantaneous change, using a suitable amount of thresholds th1 and th2 with different signs from each other. The above comparison is performed by the comparison circuits 1343, 1344.

Detection of the indents D will be described below, referring to FIG. 5. Here, the thresholds th1 and th2 are previously determined for the instantaneous changes as shown in FIG. 5A.

The comparison circuit 1343 compares the positive threshold th1 with the instantaneous change to output the comparison results (FIG. 5B) to the first input terminal of the NOR circuit 1345. On the other hand, the comparison circuit 1344 compares the negative threshold th2 with the instantaneous change to output the comparison results (FIG. 5C) to the second input terminal of the NOR circuit 1345.

And, the NOR circuit 1345 performs the NOR logical operation of the input from the first input terminal with the output from the second input terminal. Thereby, the output of the NOR circuit 1345 is performed as shown in FIG. 5D. The operation results show the positions of the indents D, and is output to the above averaging circuit 133 as an enable signal.

Though the NOR circuit 1345 shown in the present embodiment is H active, it may be another logical operator, according to requirements from the polarity of the enable terminal in the averaging circuit 133, and, requirements from the output polarities of the comparison circuits 1343, 1344.

The clock generation circuit 20 generates a timing clock by crystal oscillation without temperature correction of the frequencies, that is, a clock including possible errors caused by temperature changes, and then the generated timing clock is input to the timer 30.

The timer 30 counts the above timing clock, and outputs a signal denoting the receiving timing, every time a number n specified by the CPU 50 is counted, to set the timing correction circuit 40.

The timing correction circuit 40 is operated immediately after the setting by the timer 30, and outputs a receiving timing specified by the timer 30 after correction by a delay τ notified by the CPU 50 described later, using an accurate system clock operating at a frequency f2 in synchronization with the system.

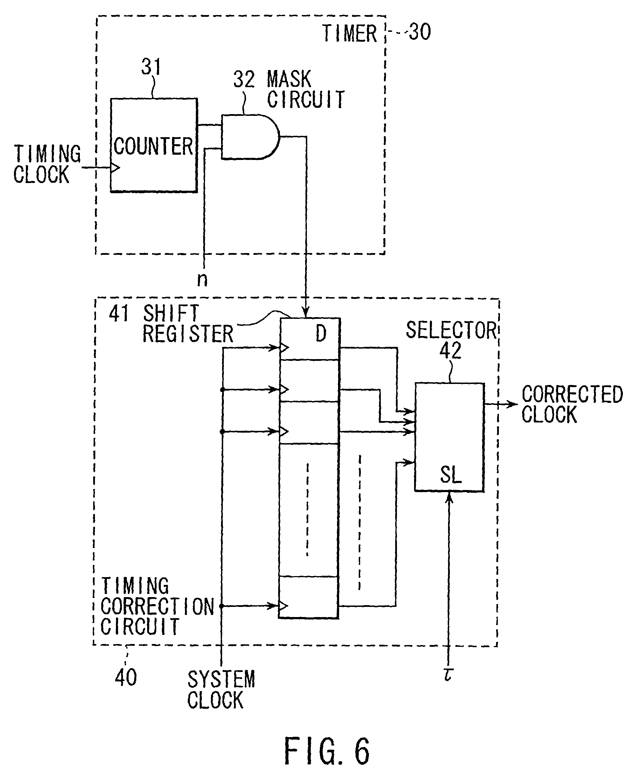

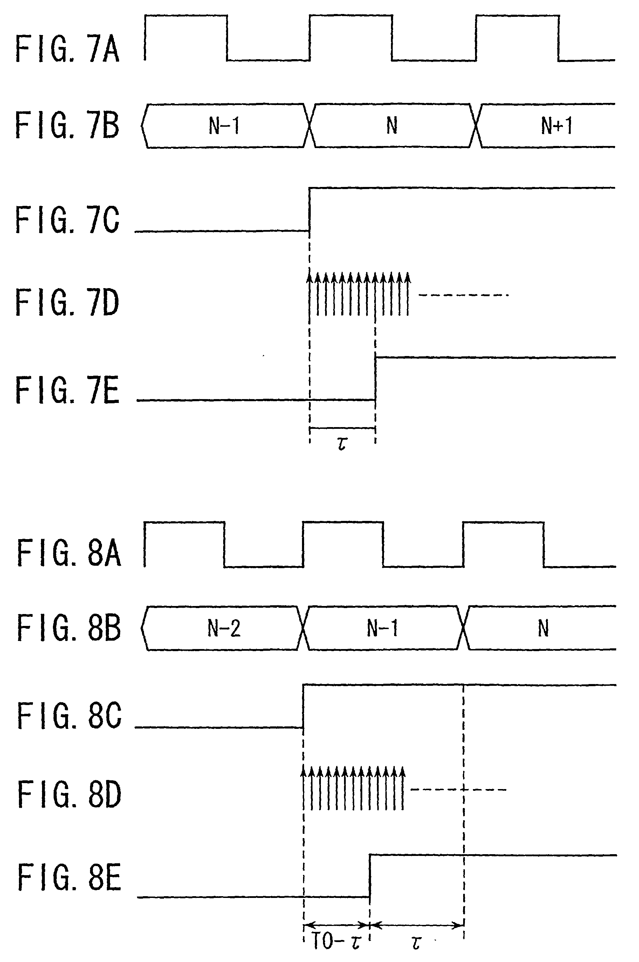

FIG. 6 is an example of a configuration of the timer 30 and the timing correction circuit 40. Wave forms of input/output signals of each components of the timer 30 and the timing correction circuit 40 are shown in FIG. 7, and FIG. 8, respectively for the cases where the receiving timing is fast, and slow.

The timer 30 comprises a counter 31 having the above timing clock as a clock input, and a mask circuit 32.

The counter 31 counts the timing clock (FIG. 7A and FIG. 8A) to output the counted value (FIG. 7B and FIG. 8B) to the mask circuit 32.

On the other hand, after comparison of a counted value of the counter 31 with a set value n notified from the CPU 50, the mask circuit 32 makes an output at the L level when the both values are different each other, and starts an output at the H level when they coincide with each other.

That is, there is a transition of the output of the mask circuit 32 from the L logic to the H one at a time when the counter value of the counter 31 coincides with the set value n. At this time, the rising edge of the output of the mask circuit 32 is output as the above receiving timing to the timing correction circuit 40.

Here, when the sign Si of the instantaneous change notified from the above Δf sign decision circuit 134 is positive, that is, when the receiving timing is fast, the CPU 50 sets "N" as the above set value n.

Therefore, the output of the mask circuit 32 at the H level is obtained as shown in FIG. 7C, when the counted value becomes N. N is the number of pulses when the previously determined non-receiving duration is counted by the clock generation circuit 20 operating at an ideal state (cycle T0). For example, if f1 equals to 32 kHz, and the non-receiving duration Ls is 1280 msec, N becomes 40960. The above calculation is performed by the CPU.

On the other hand, when the sign Si of the instantaneous change is negative, that is, when the receiving timing is slow, "N-1" is set as the above set value n. Then, the output of the mask circuit 32 at the H level is obtained as shown in FIG. 8C, when the counted value becomes N-1.

The timing correction circuit 40 comprises a shift register 41, and a selector 42.

The output of the above mask circuit 32 is supplied to the shift register 41. The shift register 41 reads the output of the mask circuit 32, using the system clock. That is, the output of the mask circuit 32 is latched with the system clock, as shown in FIG. 7D and FIG. 8D, to output the data stored in each register to the selector 42.

That is, the output of the mask circuit 32 in synchronization with the timing clock is made to one in synchronization with the system clock, and delayed by a cycle of the system clock to obtain the latch output of each register of the shift register 41.

Here, the clock cycle supplied to the shift register 41 is an important parameter to decide the accuracy for the timing adjustment. Another clock with higher speed and in synchronization with the system clock may be used as a clock input of the shift registers, instead of the system clock, though the system clock is used in the present embodiment,

The selector 42 selectively outputs the latch output corresponding to the delay $\tau$ notified from the CPU 50 described later among the latch outputs of each register of the shift register 41 to the CPU 50, as shown in FIG. 7E and FIG. 8E.

Here, the selector 42 selects the latch output behind the receiving timing obtained by the mask circuit 32 by $\tau$ as shown in FIG. 7E, when the receiving timing is fast.

On the other hand, the selector 42 selects the latch output behind the receiving timing obtained by the mask circuit 32 by T0 (ideal cycle of the timing clock) - $\tau$ as shown in FIG. 8E, when the receiving timing is slow.

Thereby, timing near the required receiving time among the latch outputs of each register of the shift register 41 is output to the CPU 50.

The CPU 50 performs integrated control of each part of the above mobile radio terminal device, and comprises a processor such as a CPU or a DSP, and a RAM, and ROM to store control programs and various kinds of data.

And, a receiving system not shown is operated using the system clock at communication, and using the timing clock corrected by the timing correction circuit 40 at waiting operation.

Moreover, the CPU 50 has a $\tau$ estimation circuit 51 to obtain the timing correction $\tau$. $\tau$ is an error between the receiving time obtained by the timer 30 and the required receiving time, and is calculated according to a formula: $\tau = Ls \times \Delta f \times 10e\text{-}6$. Here, Ls means a length of the non-receiving duration.

For example, when it is assumed that Ls is 1280 msec and $\Delta f$ is 20 ppm, $\tau$ equals to 25.6 $\mu$sec. As the frequency deviation $\Delta f$ may be changed by an external environment such as temperature, it is required to be regularly detected in the receiving duration.

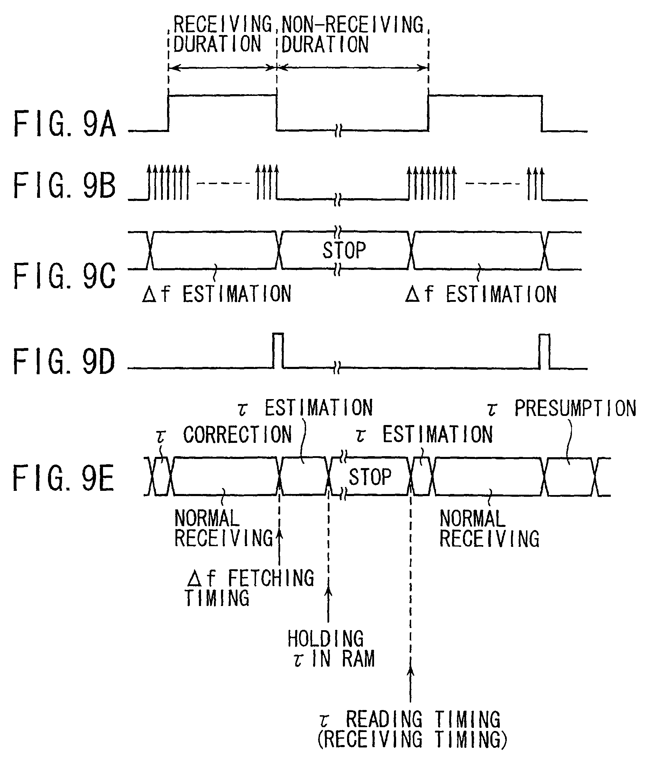

Then, the correction operation of the receiving timing at waiting operation in the mobile radio terminal device with the above configuration will be described below, referring to FIG. 9.

While the receiving duration and the non-receiving one (waiting time) are alternately repeated, as shown in FIG. 9A, the CPU 50 uses the higher-speed system clock than just before and in the receiving duration, as shown in FIG. 9B, and the timing clock corrected by the timing correction circuit 40 in the remaining non-receiving duration.

On the other hand, the frequency deviation estimation circuit 10 estimates the frequency deviation $\Delta f$ just before and in the receiving duration as shown in the FIG. 9C to obtain the sign Si; notifies it to the CPU 50, at the end of the receiving duration as shown in FIG. 9D, holding it in the hardware; and stops the operation in the remaining non-receiving duration.

As for the CPU 50, the operation is started according to the receiving timing estimated by the timer 30, as shown in FIG. 9E; the timing correction $\tau$ and the set value n are obtained, based on the frequency deviation $\Delta f$ and the sign Si notified from the frequency deviation estimation circuit 10 according to the timing shown in FIG. 9D, and the non-receiving duration information Ls obtained from a base station; they are stored in self RAM; and then the operation is stopped.

In the non-receiving duration, the timer 30 operating at a low-speed clock estimates the receiving timing.

And, then, the CPU 50 restarts the operation according to the receiving timing estimated by the timer 30; the set value n stored in the RAM is given to the timer 30; and the receiving timing is written in the shift register 41 with the system clock. The receiving timing is corrected by reading register information corresponding to the timing correction $\tau$ stored in the RAM; and then the receiving is started according to the corrected timing.

As mentioned above, in the mobile radio terminal device with the above configuration, the frequency deviation $\Delta f$ of the timing clock is detected in the receiving duration, using a high-speed, and high-accuracy system clock, and then the timing correction τ is obtained from the detected result. The receiving timing obtained in the non-receiving duration with the timing clock is corrected by the above timing correction τ to start the receiving in the receiving duration according to the corrected receiving timing.

Thereby, according to the mobile radio terminal device with the above configuration, a required receiving timing may be obtained, even when a clock with a low frequency accuracy is used for a timer in a non-receiving duration. If a function of temperature compensation for generating the system clock is provided, it may be possible to deal with changes caused by surrounding temperature fluctuations and the like.

The detection of the frequency deviation $\Delta f$ of the timing clock is carried out in the receiving duration using a system clock to cause no possibility to increase the electric power consumption for the detection.

The present invention is not limited to the above embodiments. Naturally, various kinds of modifications may be possible without departing from the scope of the present invention.

**Claims**

1. A mobile radio terminal device for intermittently receiving according to a receiving duration and a non-receiving duration defined in time in a mobile radio communication system, characterized in that it comprises:

   receiving timing detection means to detect a starting timing of said receiving duration by counting a first clock;
   frequency error detection means to detect a relative frequency error in said first clock, using a second clock with a higher speed and a better accuracy than that of the first clock;
   timing correction means to correct a starting timing of a receiving duration detected by said receiving timing detection means, based on the frequency error detected by said frequency error detection means; and
   receiving means for receiving according to a timing corrected by said timing correction means.

2. A mobile radio terminal device according to claim 1, characterized in that it comprises:

   counting means to count said second clock to a fixed value;
   reading means to read a counted results by said counting means with said first clock; and
   error detection means to obtain differences between the counted results read by said reading means, and a relative frequency error of said first clock to said second clock by said obtained differences;

3. A mobile radio terminal device according to claim 1 or 2, characterized in that said frequency error detection means detects a relative frequency error of said first clock in said receiving duration, using said second clock.

4. A receiving circuit for intermittently receiving according to a receiving duration and a non-receiving duration defined in time in a mobile radio communication system, characterized in that it comprises:

   receiving timing detection means to detect a starting timing of said receiving duration by counting a first clock;
   frequency error detection means to detect a relative frequency error in said first clock, using a second clock with a higher speed and a better accuracy than that of the first clock; and
   timing correction means to correct a starting timing of a receiving duration detected by said receiving timing detection means, based on the frequency error detected by said frequency error detection means.

5. A receiving circuit according to claim 4, characterized in that said frequency error detection means comprises:

   counting means to count said second clock to a fixed value:
   reading means to read a counted results by said counting means with said first clock; and
   error detection means to obtain differences between the counted results read by said reading means, and a relative frequency error of said first clock to said second clock by said obtained differences;

6. A receiving circuit according to claim 4 or 5, characterized in that said frequency error detection means detects a relative frequency error of said first clock in said receiving duration, using said second clock.

FIG. 1

EP 1 089 443 A1

EP 1 089 443 A1

FIG. 2A

FIG. 2B

FIG. 2C

FIG. 2D

FIG. 2E

FIG. 2F

FIG. 2G

FIG. 2H

8

FIG. 3

FIG. 4

FIG. 5A

FIG. 5B

FIG. 5C

FIG. 5D

FIG. 6

FIG. 7A

FIG. 7B    N-1    N    N+1

FIG. 7C

FIG. 7D

FIG. 7E

$\tau$

FIG. 8A

FIG. 8B    N-2    N-1    N

FIG. 8C

FIG. 8D

FIG. 8E

$T0-\tau$    $\tau$

RECEIVING NON-RECEIVING
DURATION DURATION

FIG. 9A

FIG. 9B

FIG. 9C

STOP

Δf ESTIMATION          Δf ESTIMATION

FIG. 9D

τ ESTIMATION          τ PRESUMPTION

τ CORRECTION          τ ESTIMATION

FIG. 9E

STOP

NORMAL                NORMAL
RECEIVING             RECEIVING

Δf FETCHING
TIMING

HOLDING
τ IN RAM

τ READING TIMING
(RECEIVING TIMING)

## INTERNATIONAL SEARCH REPORT

| | International application No. |
|---|---|
| | PCT/JP00/01818 |

A. CLASSIFICATION OF SUBJECT MATTER

Int.Cl⁷　H04B　1/16
　　　　　H04L　7/00

According to International Patent Classification (IPC) or to both national classification and IPC

B. FIELDS SEARCHED

Minimum documentation searched (classification system followed by classification symbols)

Int.Cl⁷　H04B　1/16
　　　　　H04L　7/00
　　　　　H04B　7/26

Documentation searched other than minimum documentation to the extent that such documents are included in the fields searched

Jitsuyo Shinan Koho　　　　1922-1996　　Toroku Jitsuyo Shinan Koho　1994-2000
Kokai Jitsuyo Shinan Koho　1971-2000　　Jitsuyo Shinan Toroku Koho　1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 9-18405, A (Denso Corporation), 17 January, 1997 (17.01.97) & US, 5815819, A | 1-6 |
| X | JP, 8-274707, A (NEC Corporation), 18 October, 1996 (18.10.96) (Family: none) | 1-6 |
| A | JP, 8-307338, A (Fujitsu Limited), 22 November, 1996 (22.11.96) (Family: none) | 1-6 |
| A | JP, 9-153854, A (Denso Corporation), 10 June, 1997 (10.06.97) (Family: none) | 1-6 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 June, 2000 (13.06.00) | 04 July, 2000 (04.07.00) |

| Name and mailing address of the ISA/ | Authorized officer |
|---|---|
| Japanese Patent Office | |
| Facsimile No. | Telephone No. |

Form PCT/ISA/210 (second sheet) (July 1992)